# EUROPÄISCHE PATENTSCHRIFT

(11) **EP 3 496 572 B1**
(45) Veröffentlichungstag und Bekanntmachung des Hinweises auf die Patenterteilung: **22.11.2023**
(21) Anmeldenummer: 17708697.2
(22) Anmeldetag: 15.02.2017
(51) Int. Cl.: A47B 96/06, F16B 12/26

(54) **VORRICHTUNG ZUR BEFESTIGUNG EINES VORZUGSWEISE FLÄCHIGEN GEGENSTANDES AN EINEM BAUWERK**
DEVICE FOR FASTENING A PREFERABLY PLANAR OBJECT TO A CONSTRUCTION
DISPOSITIF DE FIXATION D'UN OBJET DE PRÉFÉRENCE PLAT SUR UNE CONSTRUCTION

(30) Priorität: 09.08.2016 WO PCT/EP2016/068973
(43) Veröffentlichungstag der Anmeldung: 19.06.2019
(73) Patentinhaber: HOVR PATENTS INC., Abbotsford BC V2S 2C1 (CA)
(72) Erfinder: SCHMID-KOEMMERLING, Peter, West Vancouver, British Columbia V7S 2W6 (CA)
(74) Vertreter: Stoffregen, Hans-Herbert
(86) Internationale Anmeldenummer: PCT/EP2017/053401
(87) Internationale Veröffentlichungsnummer: WO 2018/028842

(56) Entgegenhaltungen:
- DE-A1- 19 618 515
- DE-U1-202006 005 260
- DE-U1-202012 102 484

## Beschreibung

Die Erfindung bezieht sich auf eine Vorrichtung zur Befestigung eines vorzugsweise flächigen Gegenstandes, wie Regalboden oder Sitz, an einem Bauwerk, wie Wand oder Boden, umfassend ein erstes Halteelement, sowie ein zweites Halteelement, wobei das zweite Halteelement formschlüssig mit dem ersten Halteelement verbindbar ist, wobei das erste Halteelement, welches mit dem Bauwerk oder dem Gegenstand verbindbar oder integraler Bestandteil des Bauwerks oder des Gegenstands ist, ein C- oder U-förmiges Innenprofil aufweist, wobei das zweite Halteelement, welches mit dem Gegenstand oder dem Bauwerk verbindbar oder integraler Bestandteil des Gegenstandes oder des Bauwerks ist, ein C- oder U-förmiges Außenprofil aufweist, und wobei das C- oder U-förmige Außenprofil formschlüssig in dem Innenprofil aufnehmbar und mittels zumindest eines Spannelementes gegen das Innenprofil verspannbar ist.

Eine gattungsbildende Vorrichtung ist der DE 20 2006 005 260 U1 zu entnehmen. Dabei handelt es sich um einen mehrteiligen Beschlag für Kastenmöbel zur Befestigung von Möbelplatten. Von einem Möbelteil geht ein im Schnitt trapezförmiges Beschlagteil aus, auf das eine Tragschiene verschiebbar ist, die gegenüber dem Beschlagteil verspannbar ist.

Eine Verbindungsanordnung wird in der DE 20 2012 102 484 U1 beschrieben. Dabei sind Verbindungsmittel in Ausnehmungen von Möbelbauplatten vorhanden, in die formschlüssig zusammenwirkende Rastelemente einbringbar sind.

Eine Befestigungsvorrichtung nach der DE 196 18 515 A1 weist eine horizontal verlaufende Schiene auf, in die ein im Schnitt L-förmiges Befestigungselement eingreift.

Der US 9,185,979 B1 ist eine Vorrichtung mit einem "schwebenden" metallischen Regalboden und einer Halteleiste zur Befestigung des Regalbodens an einer Wand zu entnehmen.

Der metallische Regalboden ist rechteckförmig ausgebildet und umfasst fünf geschlossene Seiten, nämlich geschlossene Ober- und Unterseiten, geschlossene Seiten sowie eine geschlossene Frontseite. Der metallische Regalboden weist eine Rückseite auf, die teilweise geschlossen ist.

Die vorliegende Erfindung ist in Anspruch 1 definiert. Der Erfindung liegt die Aufgabe zugrunde, eine Befestigungsvorrichtung der eingangs genannten Art derart weiterzubilden, dass diese eine einfache Konstruktion aufweist und vielseitig einsetzbar ist. Insbesondere soll die Möglichkeit gegeben sein, den Gegenstand beim Fixieren in horizontaler Richtung auszugleichen.

Die Aufgabe wird erfindungsgemäß u. a. dadurch gelöst, dass das zweite Halteelement einen ersten Schenkel und einen zweiten Schenkel sowie einen die Schenkel verbindenden Steg umfasst, wobei der erste Schenkel gerade und rechtwinklig zu dem Steg verläuft, wobei der zweite Schenkel einen ersten Schenkelabschnitt aufweist, der sich in einem stumpfen Winkel α schräg zu dem Steg erstreckt, sowie einen zweiten Schenkelabschnitt im Anschluss an den schrägen ersten Schenkelabschnitt, der sich parallel zu dem ersten Schenkel erstreckt, und dass das zumindest eine Spannelement gegen den ersten Schenkel des zweiten Haltelementes gerichtet ist.

Das erste Halteelement weist ein C- oder U-förmiges Innenprofil auf, in dem das C- oder U-förmige Außenprofil des zweiten Halteelements formschlüssig aufnehmbar und mittels zumindest eines Spannelements gegen das erste Halteelement verspannbar ist.

Das C- oder U-förmige Außenprofil sowie das C- oder U-förmige Innenprofil weisen jeweils korrespondierende schräge Schenkel oder Abschnitte auf, die im zusammengesetzten Zustand aneinander angrenzen. Ergänzend zu den schrägen Schenkeln oder Abschnitten weisen das erste und das zweite Halteelement jeweils gerade Schenkel oder Abschnitte auf, wobei in dem geraden Schenkel oder Abschnitt des ersten Halteelements das Spannelement in Form einer Schraube aufgenommen ist, die gegen den geraden Schenkel oder Abschnitt des zweiten Haltelementes verspannbar ist, wodurch sich das erste Halteelement mit dem zweiten Halteelement keilartig verspannt.

Gern, einer bevorzugten Ausführungsform ist vorgesehen, dass das C- oder U-förmige Innenprofil des ersten Halteelements ein Innenprofil einer C- oder U-Schiene oder ein Innenprofil eines extrudierten Strangprofils, wie A1-Profil, ist.

Die C- oder U-Schiene umfasst einen ersten und zweiten Schenkel sowie einen die Schenkel verbindenden Steg, wobei der erste Schenkel rechtwinklig zu dem Steg verläuft und wobei der zweite Schenkel einen ersten Schenkelabschnitt oder Flächenabschnitt aufweist, der gerade und rechtwinklig zu dem Steg verläuft sowie einen daran anschließenden zweiten Schenkelabschnitt oder Flächenabschnitt aufweist, der in Richtung des ersten Schenkels gebogen oder geneigt ist und bezogen auf den geraden Schenkelabschnitt oder den Flächenabschnitt schräg verläuft.

Zur besseren Fixierung und zum Höhenausgleich in horizontaler und/oder vertikaler Richtung ist vorgesehen, dass der erste Schenkel und/oder der zweite Schenkel des ersten Halteelementes jeweils einen schrägen Schenkelabschnitt oder den schrägen Flächenabschnitt aufweist und dass der schräge Schenkelabschnitt oder Flächenabschnitt mit einem korrespondierenden schrägen Schenkel- oder Flächenabschnitt des zweiten Halteelements formschlüssig zusammenwirkt.

Es ist vorgesehen, dass das zumindest eine Spannelement in dem ersten Schenkel und/oder dem zweiten Schenkel in dem geraden Schenkelabschnitt und/oder dem schrägen Schenkelabschnitt angeordnet ist.

Um den Gegenstand in Form eines Regalbodens oder Sitzes nach dem Fixieren in horizontaler Richtung auszurichten, ist vorgesehen, dass das zumindest eine Spannelement als eine Schraube, wie Stiftschraube, ausgebildet ist, die in einem Gewinde des ersten oder zweiten Schenkels des ersten Halteelementes aufgenommen ist, wobei sich eine Mittelachse des Spannelementes parallel zu dem Steg erstreckt.

Zur einfachen Montage ist vorgesehen, dass das erste Halteelement eine frontseitige Öffnung mit einer Weite (W) aufweist, die größer ist als eine Höhe (H) des C- oder U-förmigen Außenprofils des zweiten Halteelementes. Bei dieser Ausführungsform kann das zweite Halteelement mit dem befestigten Gegenstand frontseitig in das erste Halteelement eingeschoben werden.

Alternativ besteht die Möglichkeit, dass das zweite Halteelement stirnseitig in das erste Halteelement entlang seiner Längsachse einschiebbar ist. Bei dieser Ausführungsform weist das erste Halteelement eine frontseitige Öffnung mit einer Weite (W) auf, die kleiner ist als eine Höhe (H) des C- oder U-förmigen Außenprofils des zweiten Halteelementes.

Eine weitere bevorzugte Ausführungsform zeichnet sich dadurch aus, dass das zweite Halteelement in dem ersten Halteelement mittels Rastelementen verrastbar angeordnet ist.

Bei dieser Anordnung weist der gerade und/oder schräge Schenkelabschnitt oder Flächenabschnitt des zweiten Halteelementes außenseitig in Längsrichtung eine Rastnase oder Rille auf, wobei eine Innenfläche des geraden oder schrägen Schenkelabschnitts des ersten Halteelementes korrespondierend eine Rille zur Aufnahme der Rastnase oder eine Rastnase zum Einrasten in die Aufnahme der Rille aufweist.

Vorzugsweise ist das erste oder zweite Halteelement mit seinem Steg an einem Längsrand eines flächigen Gegenstandes, wie Regalboden, angeordnet oder an diesem befestigt. Bei einer "schwebenden" Anordnung ist das erste oder zweite Halteelement verdeckt in einer Nut oder in einem Hohlraum eines Längsrandes des flächigen Gegenstandes angeordnet.

Zur Verstärkung der Verbindung zwischen dem ersten oder zweiten Halteelement und dem flächigen Gegenstand ist vorgesehen, dass sich von dem Steg des ersten oder zweiten Halteelementes eine Verstärkungslasche zur Verbindung mit dem flächigen Gegenstand erstreckt, wobei die Verstärkungslasche sich rechtwinklig zu dem Steg erstreckt und mit diesem eine L-Form oder T-Form bildet.

Alternativ können sich von dem Steg auch zwei Verstärkungslaschen erstrecken, die mit dem Steg eine U-Form zur Aufnahme des flächigen Gegenstandes bildet.

Bei einer bevorzugten Ausführungsform ist vorgesehen, dass das erste oder zweite Halteelement mit seinem Steg auf der Wandfläche oder einer Bodenfläche befestigbar ist und dass der flächige Gegenstand ein Regalboden, eine Fensterbank, ein Sitz oder ein Wandelement ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Zeichnungen zu entnehmenden bevorzugten Ausführungsbeispielen.

Es zeigen:
- Fig. 1: eine Seitenansicht einer Befestigungsvorrichtung mit einer ersten Ausführungsform eines ersten und zweiten Halteelements zur Befestigung eines Regalbodens,
- Fig. 2: eine Seitenansicht der Befestigungsvorrichtung in einem zusammengesetzten Zustand,
- Fig. 3: eine perspektivische Darstellung der ersten Ausführungsform des ersten und zweiten Halteelementes gem. Fig. 1,
- Fig. 4: eine Vorderansicht der Befestigungsvorrichtung,
- Fig. 5: eine Rückansicht des ersten Halteelementes der Befestigungsvorrichtung,
- Fig. 6: eine Rückansicht des zweiten Halteelementes der Befestigungsvorrichtung,
- Fig. 7: eine perspektivische Darstellung einer zweiten Ausführungsform des ersten Halteelementes mit Verbindungssteg,
- Fig. 8: eine Vorderansicht eines ersten Halteelementes gem. Fig. 7 mit Verbindungssteg,
- Fig. 9: eine Seitenansicht einer Befestigungsvorrichtung mit einer zweiten Ausführungsform des zweiten Halteelements,
- Fig. 10a: eine Seitenansicht des ersten Halteelementes der Befestigungsvorrichtung gem. Fig. 9,
- Fig. 10b: eine Seitenansicht des zweiten Halteelementes der Befestigungsvorrichtung gem. Fig. 9,
- Fig. 11: eine Seitenansicht einer Befestigungsvorrichtung mit einer dritten Ausführungsform eines zweiten Halteelementes,
- Fig. 12: eine Seitenansicht der Befestigungsvorrichtung gem. Fig. 11 mit weiteren Spannelementen,
- Fig. 13: eine Seitenansicht einer Befestigungsvorrichtung mit einer zweiten Ausführungsform eines ersten Halteelementes,
- Fig. 14: eine Seitenansicht der Befestigungsvorrichtung gem. Fig. 13 mit geänderter Anordnung der Spannelemente,
- Fig. 15: eine Seitenansicht einer Befestigungsvorrichtung gem. Fig. 9 mit einer ersten Ausführungsform eines Rastmechanismus,
- Fig. 16: eine Seitenansicht einer Befestigungsvorrichtung gem. Fig. 9 mit einer zweiten Ausführungsform eines Rastmechanismus,
- Fig. 17: eine Seitenansicht einer Befestigungsvorrichtung gem. Fig. 9 mit einer dritten Ausführungsform eines Rastmechanismus,
- Fig. 18: eine Seitenansicht einer Befestigungsvorrichtung gem. Fig. 9 mit einer vierten Ausführungsform eines Rastmechanismus,
- Fig. 19: eine Seitenansicht einer Befestigungsvorrichtung gem. Fig. 9 mit einer fünften Ausführungsform eines Rastmechanismus,
- Fig. 20: eine Seitenansicht einer Befestigungsvorrichtung gem. Fig. 9 mit einer zweiten Ausführungsform eines Spannelementes,
- Fig. 21: eine Seitensicht eines Regalbodens mit einem in einer Längsnut aufgenommenen zweiten Halteelement,
- Fig. 22a: eine Seitenansicht eines Regalbodens mit Halteelement in Schnittdarstellung,
- Fig. 22b: eine Draufsicht auf den Regalboden mit Halteelement in Schnittdarstellung,
- Fig. 23: eine Seitenansicht eines Regalbodens mit einer dritten Ausführungsform eines zweiten Halteelementes in Schnittdarstellung,
- Fig. 24: eine Seitenansicht eines Regalbodens mit einer vierten Ausführungsform eines zweiten Halteelementes in Schnittdarstellung,
- Fig. 25: eine Seitenansicht des Regalbodens gem. Fig. 24 mit Abdeckung,
- Fig. 26: eine Seitenansicht eines Regalbodens mit einer fünften Ausführungsform eines zweiten Halteelementes in Schnittdarstellung,
- Fig. 27: eine Seitenansicht eines Regalbodens mit einer sechsten Ausführungsform eines zweiten Halteelementes in Schnittdarstellung,
- Fig. 28: eine perspektivische Ansicht der sechsten Ausführungsform des Halteelements gem. Fig. 27,
- Fig. 29: eine Draufsicht des Regalbodens gem. Fig. 27,
- Fig. 30: eine perspektivische Ansicht eines nicht-erfindungsgemäßen Handtuchhalters,
- Fig. 31: eine Seitenansicht einer alternativen Befestigungsansicht mit einer siebten Ausführungsform eines ersten und zweiten Halteelementes in einem getrennten Zustand,
- Fig. 32: eine Seitenansicht der Befestigungsvorrichtung nach Fig. 31 in einem zusammengesetzten Zustand,
- Fig. 33: eine Seitenansicht einer Befestigungsvorrichtung mit einer achten Ausführungsform eines ersten und zweiten Halteelementes,
- Fig. 34: eine Seitenansicht einer neunten Ausführungsform eines ersten und zweiten Halteelementes und
- Fig. 35: eine perspektivische Ansicht der neunten Ausführungsform des Halteelementes gem. Fig. 34.

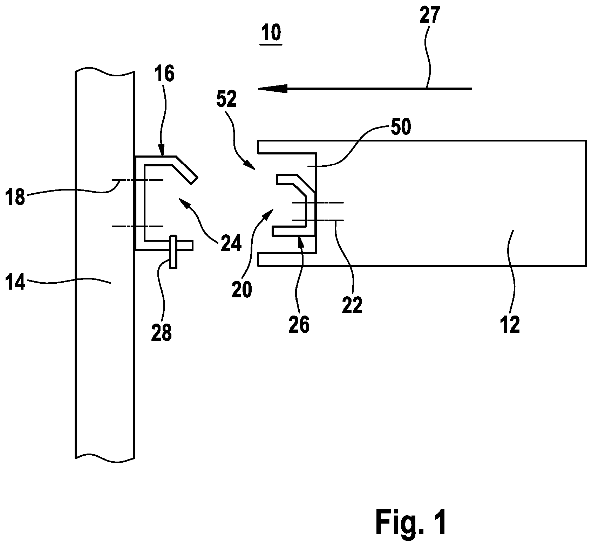

Fig. 1 zeigt in Seitenansicht eine erste Ausführungsform einer Befestigungsvorrichtung 10 zur Befestigung eines flächigen Gegenstandes 12, wie Regalboden, an einem Bauwerk 14, wie z. B. an einer Wand. Die Befestigungsvorrichtung umfasst ein erstes Halteelement 16, das über Befestigungselemente 18, wie Schrauben, mit dem Bauwerk 14 verbindbar ist. Ferner umfasst die Befestigungsvorrichtung ein zweites Haltelement 20, welches über Befestigungselemente 22, wie Schrauben, mit dem Gegenstand 12 verbindbar ist.

Gem. der Erfindung ist das erste Halteelement 16 klammerförmig ausgebildet und weist ein C-förmiges Innenprofil 24 auf, in dem das zweite Halteelement 20, welches ein C-förmiges Außenprofil 26 aufweist, formschlüssig aufnehmbar ist. Hierzu wird der Regalboden 22 in Richtung des Pfeils 27 frontseitig in das erste Halteelement 16 geführt, so dass das zweite Halteelement 20 in dem C-förmigen Innenprofil 24 formschlüssig aufgenommen und mittels eines Spannelementes 28, wie Stiftschraube, gegen eine Innenfläche des C-förmigen Innenprofils 24 verspannbar ist.

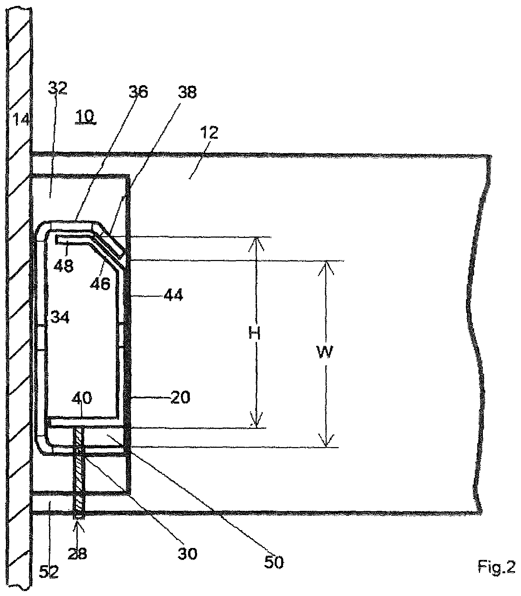

Fig. 2 zeigt eine Seitenansicht der Befestigungseinrichtung 10 im zusammengesetzten Zustand. Das erste Halteelement 16 weist frontseitig eine Öffnung mit einer lichten Weite W auf, die zumindest einer Höhe H des C-förmigen Außenprofils 26 des zweiten Halteelementes 20 entspricht, so dass das zweite Haltelement 20 frontseitig in das C-förmige Innenprofil 24 des ersten Halteelementes 16 einsteckbar ist,

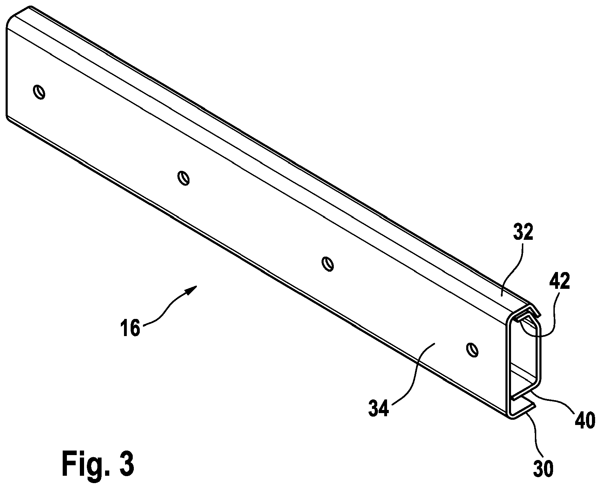

Das erste Haltelement 16 sowie das zweite Halteelement 20 sind jeweils als C-Schiene ausgebildet, die in Fig. 3 in perspektivischer Ansicht dargestellt sind.

Das erste Haltelement 16 umfasst einen ersten Schenkel 30, einen zweiten Schenkel 32 sowie einen die Schenkel 30, 32 verbindenden Steg 34. Der erste Schenkel 30 erstreckt sich rechtwinklig zu dem Steg 34 und der zweite Schenkel 30 umfasst einen ersten Schenkelabschnitt 36, der sich rechtwinklig zu dem Steg 34 und parallel zu dem ersten Schenkel 30 erstreckt, sowie einen sich an den ersten Schenkelabschnitt 36 anschließenden zweiten Schenkelabschnitt 38, der in Richtung des ersten Schenkels 30 gebogen ist und bezogen auf den geraden Schenkelabschnitt 36 schräg verläuft.

Das zweite Halteelement 20 ist ebenfalls als C-Schiene ausgebildet und umfasst einen ersten Schenkel 40, einen zweiten Schenkel 42 sowie einen den ersten Schenkel 40 mit dem zweiten Schenkel 42 verbindenden Steg 44. Der erste Schenkel 40 erstreckt sich im Wesentlichen rechtwinklig zu dem Steg 44. Der zweite Schenkel 42 umfasst einen ersten Schenkelabschnitt 46, der in Richtung des ersten Schenkels 40 gebogen und gegenüber dem Steg 44 schräg verläuft. An den ersten Schenkelabschnitt 46 schließt sich ein zweiter Schenkelabschnitt 48 an, der parallel zu dem ersten Schenkel 40 verläuft.

Die Stiftschraube 28 ist in dem ersten Schenkel 30 des ersten Haltelementes derart aufgenommen, dass sich eine Längsachse parallel zu dem Steg 34 erstreckt, so dass diese gegen den ersten Schenkel 40 des zweiten Halteelementes kraftbeschlagt anliegt, um den ersten schrägen Schenkelabschnitt 46 des zweiten Halteelementes kraftbeaufschlagt gegen den schrägen zweiten Schenkelabschnitt 38 des ersten Haltelementes zu verspannen. Bei dem in Fig. 2 dargestellten Ausführungsbeispiel liegen im verspannten Zustand die schrägen Schenkelabschnitte 38, 46 sowie ein Längsrand des ersten Schenkels 40 gegen den Steg 34 des ersten Halteelementes an, so dass ein Kippen des ersten Halteelementes innerhalb des C-förmigen Innenprofils 24 des ersten Haltelementes verhindert ist.

In dem dargestellten Ausführungsbeispiel ist das erste Halteelement 20 in einer Längsnut 50 des Regalbodens 12 aufgenommen, die entlang eines wandseitigen Längsrandes 52 des Regalbodens 12 ausgebildet ist. Im montierten Zustand ist die Befestigungsvorrichtung 10 folglich abgedeckt und nicht sichtbar.

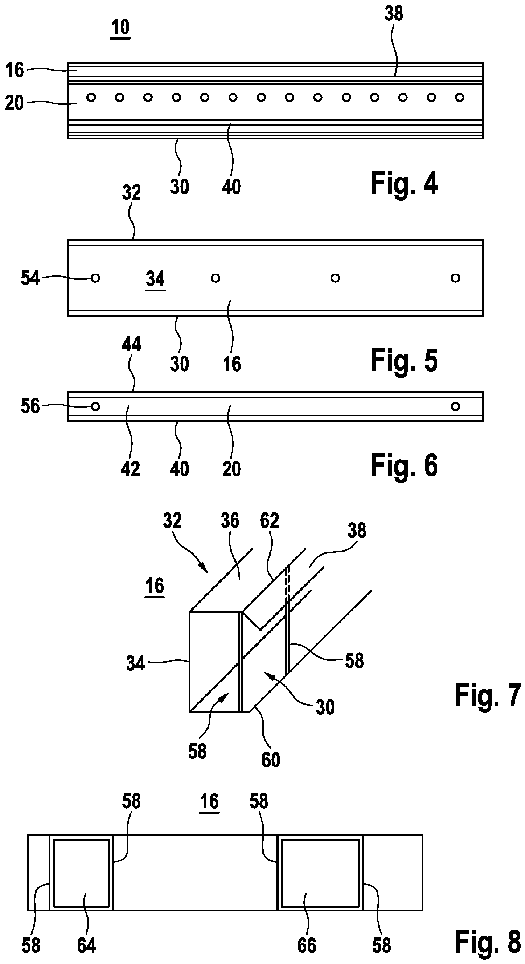

Fig. 4 zeigt eine Vorderansicht der Befestigungsvorrichtung 10, wobei das zweite Halteelement 20 in dem ersten Halteelement 16 aufgenommen ist.

Fig. 5 zeigt eine Rückansicht des ersten Halteelementes 16, wobei in dem die Schenkel verbindenden Steg 34 Durchbrechungen 54 zu Aufnahme der Befestigungsmittel 18 vorgesehen sind.

Fig. 6 zeigt eine Rückansicht des zweiten Halteelementes 20, wobei in dem die Schenkel 40, 44 verbindenden Steg 42 Durchbrechungen 56 zur Aufnahme der Befestigungsmittel 22 vorgesehen sind.

Fig. 7 zeigt in perspektivischer Ansicht einen Abschnitt einer zweiten Ausführungsform des ersten Halteelementes 16 in Form der C-Schiene, wobei zwischen dem ersten Schenkel 30 und dem zweiten Schenkel 32 Stabilisierungsstege 58 zur Stabilisierung angeordnet sind. Dabei erstrecken sich die Stabilisierungsstege 58 parallel zu dem Verbindungssteg 34 von einem vorderen frontseitigen Rand 60 des ersten Schenkels 30 zu einem Übergang 62 zwischen dem geraden Schenkelabschnitt 36 und dem schrägen Schenkelabschnitt 38.

Fig. 8 zeigt eine Vorderansicht der zweiten Ausführungsform des ersten Halteelementes 16, wobei zwischen zwei Stabilisierungsstegen 58 Aufnahmen 64, 66 vorgesehen sind, in welche jeweils ein Abschnitt des zweiten Halteelementes eingreifen kann.

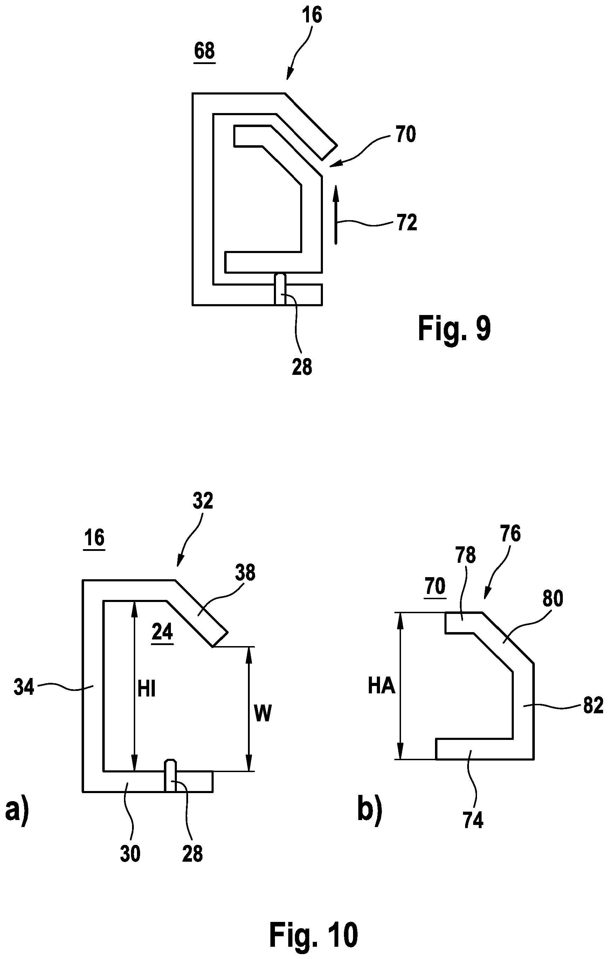

Fig. 9 zeigt eine Seitenansicht einer zweiten Ausführungsform einer Befestigungsvorrichtung 68, umfassend das erste Halteelement 16 sowie eine zweite Ausführung eines zweiten Halteelementes 70. Bei dieser Ausführungsform ist vorgesehen, dass das zweite Halteelement 70 stirnseitig in das erste Halteelement 16 einschiebbar und anschließend mittels des Spannelementes 28, wie Stiftschraube, in Richtung des Pfeils 72 verspannbar ist.

Fig. 10a zeigt das erste und Fig. 10b zeigt das zweite Halteelement in Seitenansicht. Das erste Halteelement 16 ist als C-Schiene ausgebildet, mit erstem Schenkel 30, zweitem Schenkel 32 und Verbindungssteg 34. Zwischen dem ersten Schenkel 30 und dem frontseitigen Rand des schrägen Schenkelabschnitts 38 ist die Öffnung mit der lichten Weite W gebildet. Im Gegensatz zu der ersten Ausführungsform des zweiten Halteelementes 26 weist das zweite Haltelement 70 eine Höhe HA auf, die größer ist als die lichte Weite W und im Wesentlichen einer inneren Höhe HI des C-förmigen Innenprofils 24 des ersten Halteelementes entspricht. Folglich kann das zweite Halteelement nicht durch die frontseitige Öffnung eingeführt werden, sondern muss stirnseitig in das C-förmige Innenprofil eingeschoben werden, wie dies in Fig. 9 in Seitenansicht dargestellt ist.

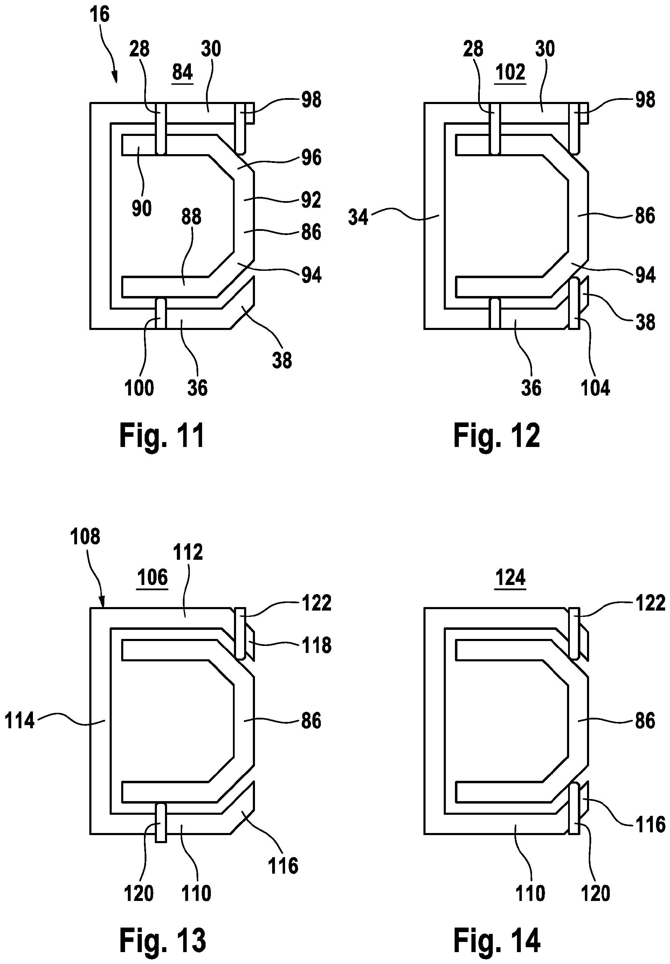

Fig. 11 zeigt eine Ausführungsform einer nicht erfindungsgemäßen Befestigungsvorrichtung 84 mit dem ersten Halteelement 16 und einem zweiten Halteelement 86, das U-förmig ausgebildet ist. Das zweite Halteelement umfasst einen ersten Schenkel 88 und einen dazu parallel verlaufenden zweiten Schenkel 90, die über einen Verbindungssteg 92 miteinander verbunden sind, wobei die ersten und zweiten Schenkel schräg verlaufende Schenkelabschnitte 94, 96 aufweisen. Die schrägen Schenkelabschnitte liegen einerseits gegen den schrägen zweiten Schenkelabschnitt 38 des ersten Halteelementes und/oder gegen ein in dem ersten Schenkel 30 randseitig angeordnetes zweites Spannelement, wie Stiftschraube 98, an. Des Weiteren ist in dem geraden Schenkelabschnitt 36 ein drittes Spannelement 100 vorgesehen, in Form einer Stiftschraube, die gegen den ersten Schenkel 88 des zweiten Halteelementes 86 verspannbar ist.

Fig. 12 zeigt in Seitenansicht eine Befestigungsvorrichtung 102, wobei ergänzend zu der Ausführungsform gem. Fig. 11 in dem schrägen Schenkelabschnitt 38 ein viertes Spannelement, wie Stiftschraube 104, angeordnete ist, welches kraftbeaufschlagt gegen den schrägen Abschnitt 94 des U-förmigen zweiten Halteelementes 86 anliegt.

Fig. 13 zeigt in Seitenansicht eine Befestigungsvorrichtung 106, wobei ein erstes Halteelement 108 U-förmig ausgebildet ist, umfassend einen ersten Schenkel 110, einen zweiten Schenkel 112 und einen die Schenkel verbindenden Steg 114. Bei dieser Ausführungsform ist vorgesehen, dass Endabschnitte 116, 118 der jeweiligen Schenkel 110, 112 aufeinander zugebogen sind und schräge Abschnitte bilden. Das zweite Halteelement 86 ist ebenfalls U-förmig ausgebildet und entspricht dem Halteelement 86 gem. Fig. 11. Das zweite Halteelement 86 ist stirnseitig in das erste Halteelement 108 eingeschoben und wird über ein erstes Spannelement 120 in einem geraden Schenkelabschnitt des Schenkels 110 sowie ein zweites Spannelement 122 in dem schrägen Schenkelabschnitt 118 fixiert.

Fig. 14 zeigt eine weitere Befestigungsvorrichtung 124, die im Wesentlichen der Befestigungsvorrichtung 106 gem. Fig. 13 entspricht. Bei der Ausführungsform 124 ist allerdings das Spannelement 120 in dem schrägen Schenkelabschnitt 116 des Schenkels 110 angeordnet, so dass die Spannelemente 120, 122 jeweils auf die schrägen Flächen 94, 96 des zweiten Halteelementes einwirken.

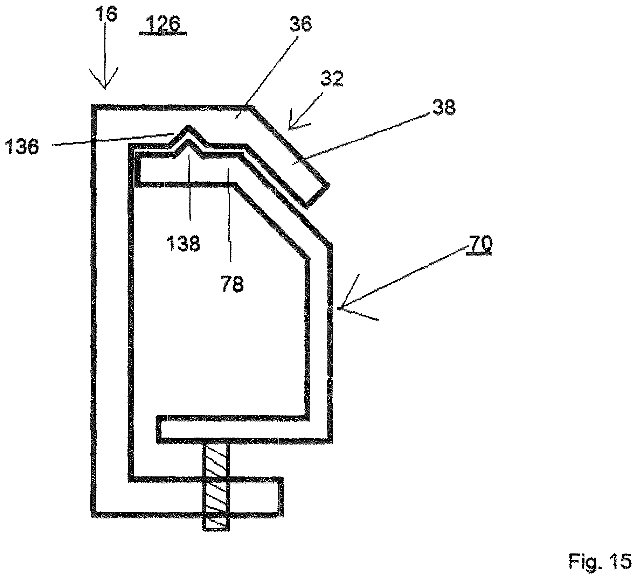

Fig. 15 bis 20 zeigen in Seitenansicht weitere Ausführungsformen 126, 128, 130, 132, 134, 136 der Befestigungsvorrichtung 68 gem. Fig. 9, wobei das zweite Halteelement 70 in seiner Endposition innerhalb des ersten Halteelements 16 über Rastmittel verrastet ist.

Bei der Befestigungsvorrichtung 126 gem. Fig. 15 ist vorgesehen, dass in dem geraden Schenkelabschnitt 36 des zweiten Schenkels 32 profilinnenseitig eine Nut 136 in Längsrichtung verläuft, in die ein Vorsprung 138 eingreift, der auf einer Oberfläche 140 des geraden Schenkelabschnitts 78 des zweiten Halteelementes 70 in Längsrichtung verläuft.

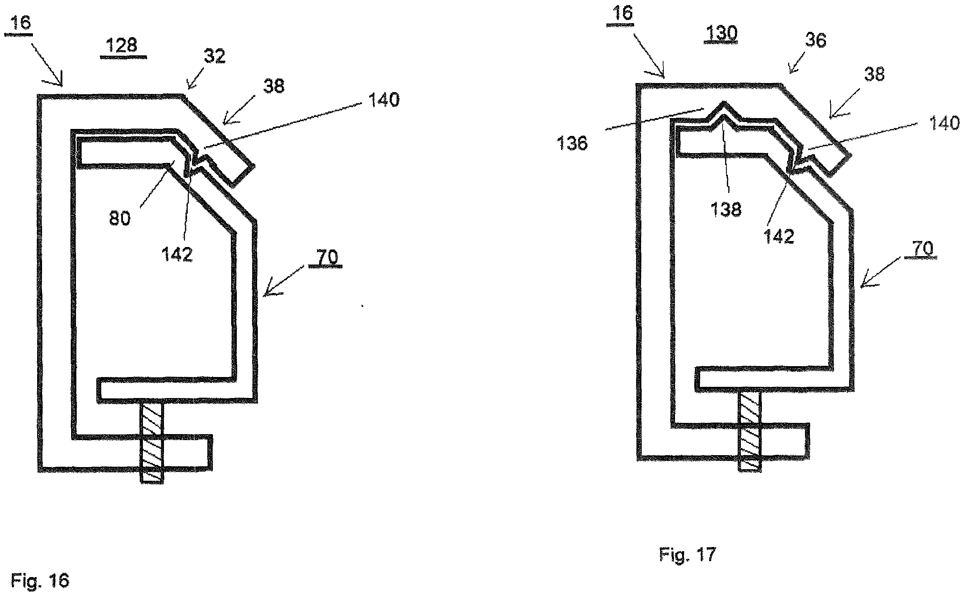

Bei der Befestigungsvorrichtung 128 gem. Fig. 16 ist vorgesehen, dass der schräge Schenkelabschnitt 38 des Schenkels 32 profilinnenseitig einen Vorsprung 140 in Längsrichtung aufweist, der in eine Nut 142 eingreift, die auf einer Außenfläche des schrägen Schenkelabschnitts 80 des zweiten Halteelementes 70 in Längsrichtung eingebracht ist.

Die Befestigungsvorrichtung 130 gem. Fig. 17 entspricht einer Kombination der Rastmittel gem. Fig. 15 und 16, wobei jeweils in dem geraden Schenkelabschnitts 36 des ersten Halteelementes 16 die Nut 136 und in dem schrägen Schenkelabschnitt 38 der Vorsprung 140 und korrespondierend dazu in dem zweiten Halteelement 70 der Vorsprung 138 in dem geraden Schenkelelement 78 und die Nut 142 in dem schrägen Schenkelelement 80 angeordnet ist.

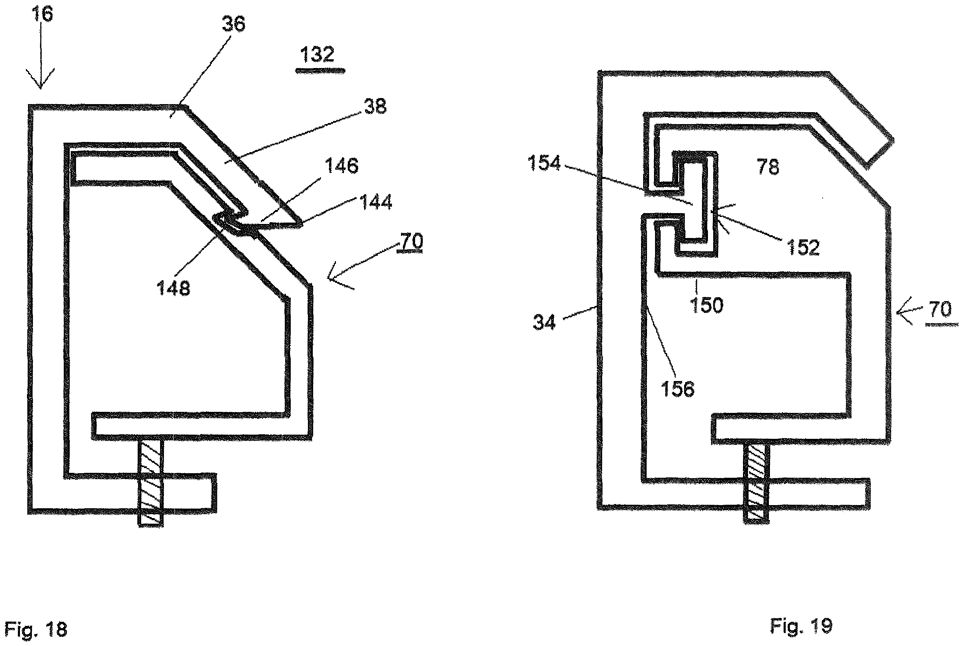

Fig. 18 zeigt die Befestigungsvorrichtung 132 als besonders bevorzugte Ausführungsform, wobei an einem Ende 144 des schrägen Schenkelabschnitts 38 des ersten Halteelementes eine in das Profilinnere gerichtete Rastnase 146 in Längsrichtung vorgesehen ist, die in eine korrespondierende Nut 148 eingreift, die in dem schrägen Schenkelabschnitt 80 des zweiten Halteelementes 70 ebenfalls in Längsrichtung vorgesehen ist.

Die Befestigungsvorrichtung 134 gem. Fig. 19 zeichnet sich dadurch aus, dass entlang eines stirnseitigen Randes des geraden Schenkelabschnittes 78 des zweiten Halteelement 70 eine Nut 152 verläuft, in die eine korrespondierende Feder 154 eingreift, die auf einer Innenseite 156 des Steges 34 des ersten Halteelementes in Längsrichtung verläuft.

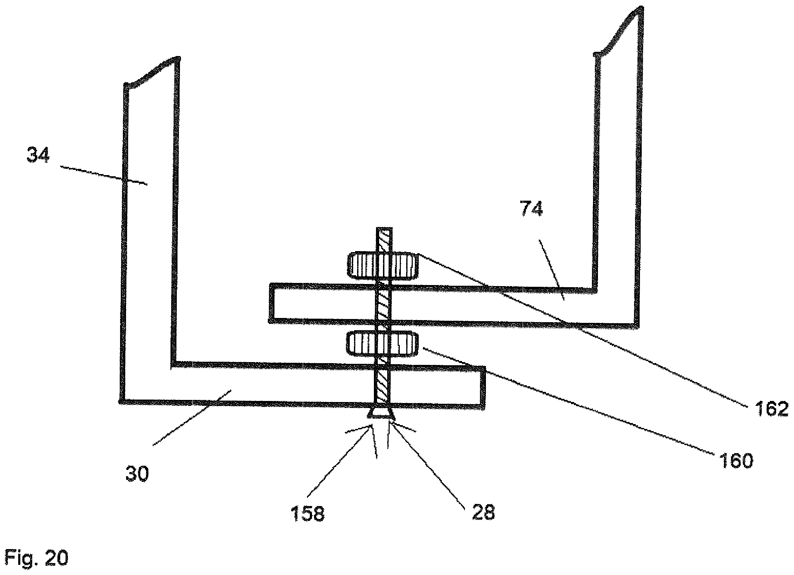

Fig. 20 zeigt einen Abschnitt einer Befestigungsvorrichtung, wobei das Spannelement 28 als eine Schraube 158 ausgebildet ist, die den Schenkel 30 durchsetzt und mittels einer Mutter 160 in dem Schenkel fixiert ist. Die Schraube 158 durchsetzt den Schenkel 74 des zweiten Halteelementes 70 und wird innenseitig wiederum mittels einer Mutter 162 fixiert. Die Mutter 162 kann auch als Spannring ausgebildet sein.

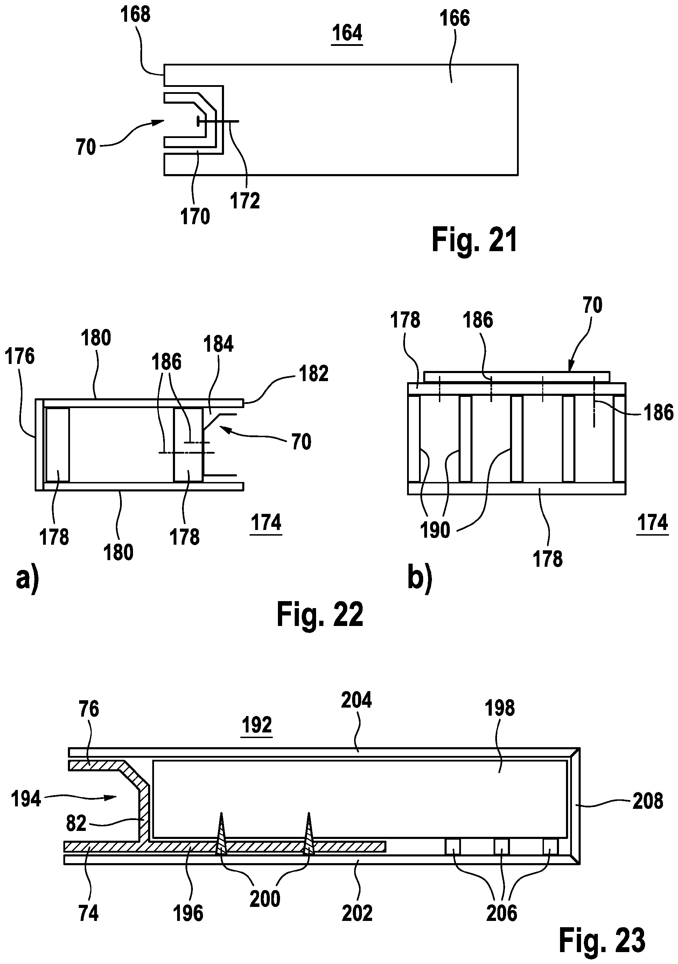

Fig. 21 zeigt eine Seitenansicht einer Regalbodenanordnung 164, mit einem Regalboden 166, z.B. aus Vollholz, wobei entlang eines wandseitigen Randes 168 eine Nut 170 eingebracht ist, in der das zweite Halteelement 70 eines Befestigungselementen 172, wie Schrauben, befestigt ist. Die Regalbodenanordnung 164 ist ausgebildet, damit diese stirnseitig in das erste Halteelement 16 eingeschoben werden kann.

Fig. 22a) zeigt eine Schnittdarstellung einer Regalbodenanordnung 174, umfassend einen Regalboden 176 aus einer Hohlkonstruktion, mit Querstegen 178, auf deren Unter- und Oberseite Paneele 178 zur Abdeckung angeordnet sind. An einem stirnseitigen Rand 182 ist ein Hohlraum 184 gebildet, in dem das zweite Halteelement 70 aufgenommen und mittels Fixierelementen 186, wie Schrauben, fixiert ist.

Fig. 22b) zeigt eine Draufsicht der Regalbodenanordnung 174 in Schnittdarstellung, umfassend die Längselemente 178, zwischen denen sich Querstreben 190 erstrecken.

Fig. 23 zeigt eine Seitenansicht einer Regalbodenanordnung 192 mit einer weiteren Ausführungsform eines zweiten Haltelementes 194. Das zweite Halteelement 194 entspricht im Wesentlichen dem Halteelement 70 gem. Fig. 10b, wobei sich rechtwinklig zu dem Steg 82 in Verlängerung des ersten Schenkels 74 ein Stützelement 196 erstreckt. Auf dem Stützelement 196 ist ein Regalboden 198 abgestützt und mittels Befestigungselementen 200, wie Schrauben, befestigt sind. Zur Abdeckung des ersten Stützelementes 194 sowie des Hohlholzes 198 ist vorgesehen, dass unterseitig sowie oberseitig jeweils Holzpaneele 202, 204 vorgesehen sind, die ggf. über Zwischenelemente 206 mit dem Hohlholz 198 verbunden, wie verklebt oder verschraubt, sind. Ferner sind entlang von Längsrändern und dem vorderseitigen Rand Abdeckelemente 208 vorgesehen, die mit dem Hohlholz verbunden, wie verschraubt oder verklebt, sind.

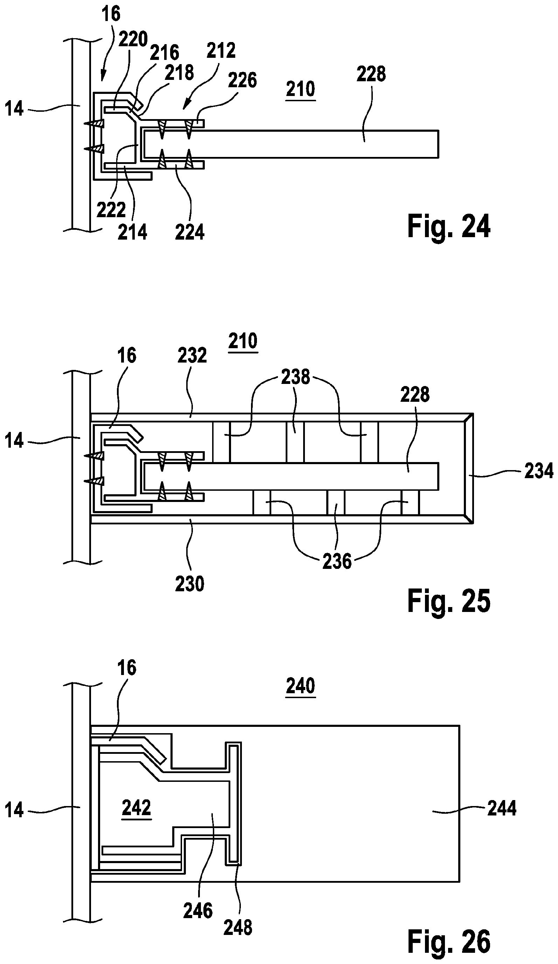

Fig. 24 zeigt in Seitenansicht eine weitere Ausführungsform einer Regalbodenanordnung 210. Die Regalbodenanordnung 210 umfasst das erste Halteelement 16 gem. Fig. 1, welches an der Wand 14 befestigt ist. In dem ersten Halteelement 16 ist ein zweites Halteelement 212 fixiert, welches entsprechend den Ausführungsformen (gem. Fig. 2 und Fig. 10b) einen ersten Schenkel 214 sowie einen zweiten Schenkel 216 mit einem schrägen Schenkelabschnitt 218 und einem geraden Schenkelabschnitt 220 aufweist, die ein C-förmiges Außenprofil bilden. Von einem die Schenkel 214, 216 verbindenden Steg 222 erstreckt sich in Verlängerung des ersten Schenkels 214 ein dritter Schenkel 224 sowie in Verlängerung des zweiten Schekels 216 ein vierter Schenkel 226, wobei die Schenkel 224, 226 mit dem Verbindungssteg 222 eine U-Form bilden, in der ein Regalboden 228 stirnseitig aufgenommen ist.

Fig. 25 zeigt die Regalbodenanordnung gem. Fig. 24 ebenfalls in einer Seitenansicht, wobei der Regalboden 228 unterseitig, oberseitig und randseitig jeweils mit Deckelementen, wie Holzpaneelen 230, 233, 234, verkleidet ist, wobei die Holzpaneelen 230, 232 jeweils über Stützelemente 236, 238 mit dem Regalboden 228 verbunden, wie verklebt, sind.

Fig. 26 zeigt in Seitenansicht eine Regalbodenanordnung 240 mit einem ersten Halteelement 242, welches mit einem Regalboden 244 verbunden ist. Das zweite Halteelement 242 weist wandseitig ein C-förmiges Außenprofil aus, wie dies den Ausführungsformen gem. Fig. 2 und Fig. 10b entspricht. Regalbodenseitig weist das zweite Haltelement 242 eine T-förmige Außenkontur 246 auf, die in einer T-förmigen Nut 248 des Regalbodens 244 aufgenommen ist.

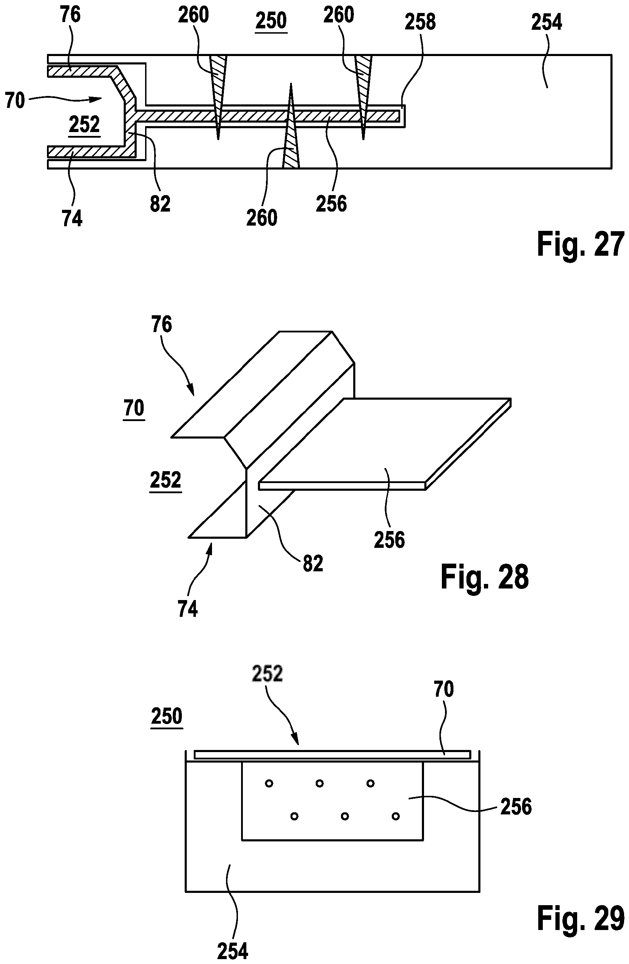

Fig. 27 zeigt in Seitenansicht eine weitere Ausführungsform 250 einer Regalbodenanordnung, umfassend ein zweites Halteelement 252 sowie ein zweiter Regalboden 254. Das zweite Halteelement 252 weist eine C-förmige Außenkontur auf, wie diese den Ausführungsbeispielen der Fig. 10b sowie Fig. 2 entspricht. Das zweite Halteelement 252 umfasst den ersten Schenkel 74, den zweiten Schenkel 76 sowie den die Schenkel verbindenden Steg 82, wobei sich von dem Schenkel 82 rechtwinklig etwa mittig ein Stützelement 256 erstreckt, welches in einen Längsschlitz 258 des Regalboden 254 aufgenommen und mittels Verbindungselementen, wie Schrauben 260, fixiert ist.

Fig. 28 zeigt das zweite Halteelement 252 in perspektivischer Ansicht, mit den an sich bekannten Schenkeln 74 und 76 zur Bildung der C-förmigen Außenkontur, dem Verbindungssteg 82 und dem rechtwinklig zu dem Verbindungssteg 82 sich erstreckenden Stützelement 256.

Fig. 29 zeigt eine Draufsicht auf die Regalbodenanordnung 250, mit Regalboden 254, und zweitem Halteelement 252 mit Stützelement 256.

Der Gegenstand der Erfindung ist nicht auf die zuvor genannten und beschrieben Ausführungsbeispiele beschränkt. Insbesondere sei erwähnt, dass die verschiedenen Ausführungsformen der Befestigungsvorrichtung auch zur Befestigung von Gegenständen, wie Handtuchhaltern, Sitzen, Regalböden, Balken und anderen flächigen Gegenständen verwendet werden kann.

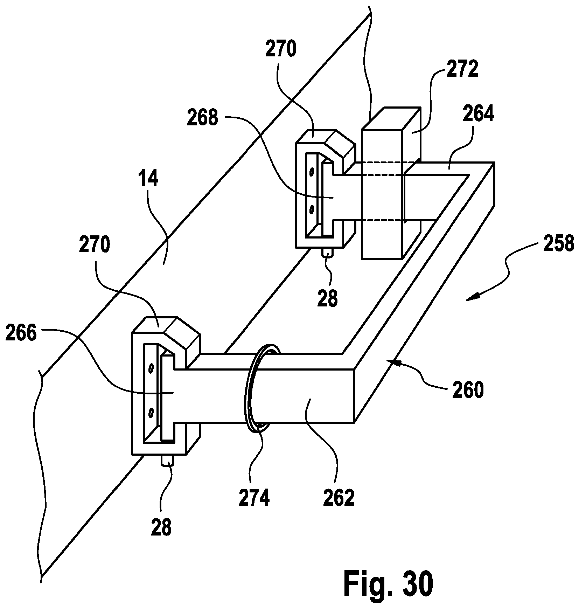

Fig. 30 zeigt in perspektivischer Ansicht eine nicht erfindungsgemäße Handtuchhalteranordnung 258 mit einem U-förmigen Handtuchhalter 260 mit Schenkeln 262, 264, mit dessen Enden 266, 268 jeweils das C-oder U-förmige Außenprofil ausgebildet ist, welches jeweils in einem ersten Halteelement 270 aufgenommen ist. Die ersten Halteelemente 270 sind im dargestellten Ausführungsbeispiel als Abschnitte einer C-Schiene ausgebildet und an der Wand 14 montiert. Der Handtuchhalter 260 wird entweder stirnseitig oder frontseitig in die Halteelemente 270 eingeschoben und jeweils über Spannelemente 28 in dem ersten Halteelement 270 fixiert.

Nach Fixierung der Schenkel 262, 264 in dem ersten Halteelement 270 können diese über Rosetten 272 mit Dichtelement 274 abgedeckt werden.

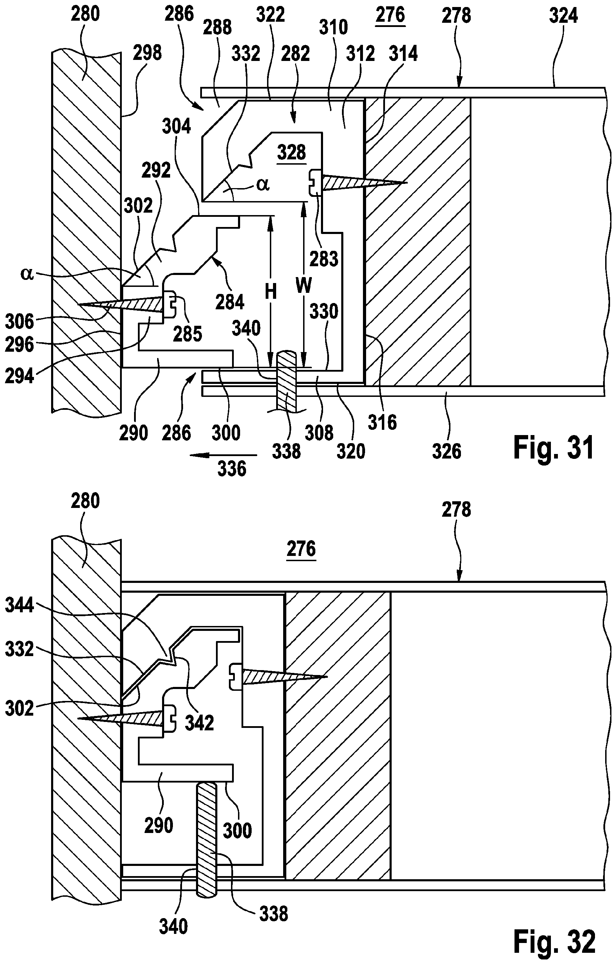

Fig. 31 zeigt in Seitenansicht eine alternative Befestigungsvorrichtung 276 zur Befestigung eines Gegenstandes 278, wie Regalboden, an einem Bauwerk 280 wie Wand. Die Befestigungsvorrichtung 276 umfasst ein erstes Haltelement 282, welches über ein Befestigungsmittel 284 mit dem zu befestigenden Gegenstand, im vorliegenden Fall ein Regalboden 278 verbunden ist. Ferner umfasst die Befestigungsvorrichtung 276 ein zweites Halteelement 284, welches über ein Befestigungsmittel 285, wie Schraube, mit der Wand 280 verbunden ist. Im dargestellten Ausführungsbeispiel weist der Regalboden 278 entlang eines wandseitigen Randes 286 eine Aufnahme 288 auf, in der das erste Halteelement 282 in Form einer Schiene oder eines Strangprofils entlang Längserstreckung des wandseitigen Randes 286 aufgenommen ist.

Das zweite Halteelement 284 weist ein im Wesentlichen C- oder U-förmiges Außenprofil 287 auf. Das Außenprofil kann auch als keilförmig bezeichnet werden. Das zweite Halteelement 284 umfasst einen ersten Schenkel 290, einen zweiten Schenkel 292 sowie einen die Schenkel 290, 292 verbindenden Steg 294. Der Steg 294 bildet wandseitig eine Fläche 296, die im montierten Zustand an einer Wandoberfläche 298 anliegt. Der erste Schenkel 290 bildet eine untere Fläche 300, die sich im Wesentlichen rechtwinklig zu der wandseitigen Fläche 296 erstreckt. Der zweite Schenkel 292 bildet einen schrägen Flächenabschnitt 302, der in einem Winkel α mit 10° ≤ α ≤ 80°, vorzugsweise α = 45°, bezogen auf eine Horizontale schräg verläuft und endseitig in einen geraden Flächenabschnitt 304 übergeht, der parallel zu der unteren Fläche 300 verläuft. Die untere Fläche 300 und der obere Flächenabschnitt 304 verlaufen parallel zueinander und sind in einem Abstand voneinander angeordnet. Ferner ist in dem die Schenkel 290, 292 verbindenden Steg 294 eine Durchbrechung 306, wie Bohrung, zur Aufnahme des Befestigungselementes 285, wie Schraube, vorgesehen.

Das erste Haltelement 282 umfasst einen ersten Schenkel 308, einen zweiten Schenkel 310 sowie einen die Schenkel 308, 310 verbindenden Steg 312. Der Steg 312 bildet eine Seitenfläche 314, die an einer wandseitigen Oberfläche 316 des Regalbodens 278 mittels eines Befestigungselementes 283, wie Schraube, fixiert ist. Der erste Schenkel 308 bildet eine untere Fläche 320, die sich im Wesentlichen rechtwinklig zu der Seitenfläche 314 erstreckt. Der Schenkel 310 bildet eine obere Fläche 322, die parallel zu der unteren Fläche 320 verläuft.

Im dargestellten Ausführungsbeispiel sind die untere Fläche 320 und die obere Fläche 322 jeweils durch Abdeckelemente 324, 326 des Regalbodens 276 abgedeckt. Die Schenkel 308, 310 sowie der Steg 312, die im Wesentlichen einen U-förmigen Querschnitt bilden, schließen einen Hohlraum bzw. ein Innenprofil 328 ein, das im Wesentlichen einen C-oder U-förmigen Querschnitt aufweist und an das C- oder U-förmige Außenprofil des zweiten Halteelementes 284 angepasst ist.

Der erste Schenkel 308 weist innenseitig eine gerade Innenfläche 330 auf, die parallel zu der unteren Fläche 320 verläuft. Der zweite Schenkel 310 bildet innenseitig einen ersten, schrägen Flächenabschnitt 332, der gegenüber einer Horizontalen in einem Winkel α mit 10° ≤ α ≤ 80°, vorzugsweise α = 45°, geneigt verläuft und in einen geraden Flächenabschnitt 334 übergeht, der parallel oder im Wesentlichem parallel zu dem unteren Flächenabschnitt 330 verläuft. Die Flächenabschnitte 332, 334 sind derart ausgebildet, dass diese an die Flächenabschnitte 302, 304 des zweiten Halteelementes in Neigung und Länge angepasst sind, so dass diese im zusammengesetzten Zustand eine Passung bilden. Um das Regalbrett 278 in Richtung des Pfeils 336 auf das zweite Halteelement 284 aufstecken zu können, ist ein unterer Rand 337 des zweiten Schenkels 310 in einem Abstand W von einem oberen Rand des ersten Schenkels 308 beabstandet.

Fig. 32. zeigt die Befestigungsvorrichtung 276 in einem zusammengesetzten Zustand, wobei dass Regalbrett 278 mit dem ersten Haltelement 282 auf das zweite Halteelement 284 aufgesteckt und fixiert ist. Das zweite Halteelement ist mittels eines Spannelementes 338 gegen das erste Halteelement an diesem fixiert. Das Spannelement 338 ist als Schraube, wie Madenschraube, ausgebildet und durchsetzt ein Gewinde 340 in dem ersten Schenkel 308, so dass die Schraube 338 kraftbeaufschlagt gegen die untere Seite 300 des zweiten Halteelementes 284 anliegt und den zweiten Schenkel 310 des ersten Haltelementes gegen den zweiten Schenkel 292 des zweiten Haltelementes 284 mit Kraft beaufschlagt. Folglich greifen die schrägen Flächenabschnitte 292 bzw. 332 und die geraden Flächenabschnitte 304 bzw. 334 ineinander und stellen eine feste Verbindung zwischen dem ersten Haltelement 282 mit dem zweiten Haltelement 284 her. Zur weiteren Fixierung ist vorgesehen, dass in der schrägen Fläche 292 eine Längsnut 342 eingeformt ist, in die eine korrespondierende Rille 344 eingreift, die in der schrägen Fläche 332 ausgeformt ist.

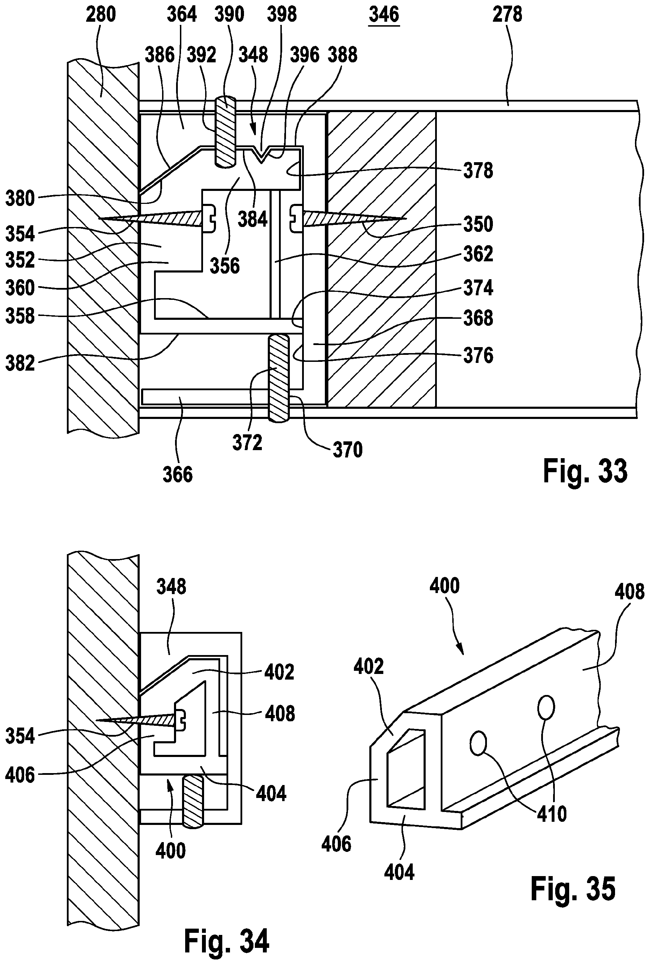

Fig. 33 zeigt eine alternative Ausführungsform einer Befestigungsvorrichtung 346 zur Befestigung des Regalbodens 278 an der Wand 280. Die Befestigungsvorrichtung 346 umfasst ein erstes Halteelement 348, welches mittels eines Befestigungselementes 350, wie Schraube, mit dem Regalboden 278 befestigbar ist sowie ein zweites Haltelement 352, welches mittels eines Befestigungselementes 354, wie Schraube, mit der Wand 280 verbindbar ist.

Das erste Halteelement 348 ist in der Aufnahme 288 des wandseitigen Randes 286 des Regalbodens 278 aufgenommen.

Das zweite Haltelement 352 umfasst einen ersten Schenkel 356, einen zweiten Schenkel 358 sowie einen die Schenkel 356, 358 verbindenden Steg 360. Zwischen dem ersten Schenkel 356 und dem zweiten Schenkel 358 ist ein Verstärkungselement 362, wie Steg, angeordnet.

Das erste Halteelement 348 umfasst einen ersten Schenkel 364, einen zweiten Schenkel 366 sowie einen die Schenkel verbindenden Steg 368. In dem unteren Schenkel 366 ist ein Gewinde 370 zur Aufnahme eines Spannelementes 372 vorgesehen, welches kraftbeaufschlagt gegen den zweiten Schenkel 358 des zweiten Haltelementes anliegt, wobei eine Kraftwirkung des Spannelementes 372 in den Verbindungssteg 362 gerichtet ist.

Des Weiteren ist vorgesehen, dass der zweite Schenkel 358 mit seinem Längsrand 374 gegen eine Innenseite 376 des Schenkels 368 anliegt, und gegen diesen abgestützt ist. Entsprechend liegt ein Längsrand 378 des ersten Schenkels 358 ebenfalls gegen die Innenseite 376 des Steges 368 an, so dass beim Verspannen des Spannelementes 372 gegen den ersten Schenkel 358 die Längsränder 374, 378 gegen die Innenseite 376 kraftbeaufschlagt werden.

Der erste Schenkel 356 bildet einen schrägen Flächenabschnitt 380 sowie einen zu einer Unterseite 382 des zweiten Schenkels 258 parallel verlaufenden Flächenabschnitt 384, wobei der erste Schenkel 364 eine korrespondierende schräge Fläche 386 und eine korrespondierende gerade Fläche 388 aufweist, die an die Flächen 380, 384 angepasst sind.

Zur weiteren Fixierung kann ein zweites Spannelement 390 vorgesehen sein, welches in einem Gewinde 392 des ersten Schenkels aufgenommen ist und kraftbeaufschlagt gegen den ersten Schenkel 356 anliegt oder in einer Aufnahme 394, wie Sackloch, aufgenommen ist.

Bei der Ausführungsform gemäß Fig. 33 ist vorgesehen, dass in der geraden Fläche 384 eine Nut 396 in Längsrichtung eingeformt ist, um eine in dem geraden Flächenabschnitt 380 eingeformte Rille 398 aufnehmen zu können.

Fig. 34 zeigt in Seitenansicht eine Ausführungsform eines zweiten Haltelementes 400 in Form eines extrudierten Strangprofils, vorzugsweise eines Al-Strangprofils, welches in dem ersten Halteelement 348 gemäß der Ausführungsform 346 aufgenommen ist. Bei dieser Ausführungsform sind ein erster Schenkel 402, ein zweiter Schenkel 404 sowie ein die Schenkel 402, 404 verbindender Steg 400 einstückig ausgebildet.

Fig. 35 zeigt eine perspektivische Darstellung des Strangprofils 400. In dem Steg 408 sind Durchbrechungen 410, wie Löcher, zur Durchführung der Schrauben 354 eingebracht.

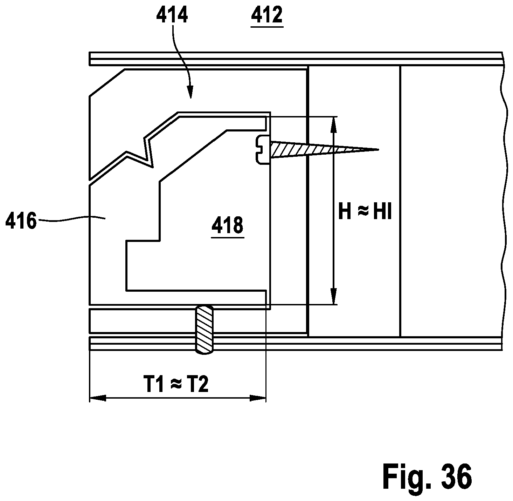

Fig. 36 zeigt eine Ausführungsform eine Befestigungsvorrichtung 412, umfassend ein erstes Haltelement 414 sowie ein zweites Haltelement 416, wobei das erste Halteelement 414 eine Aussparung 418 in Form eines C- oder U-förmigen Innenprofils aufweist, in der das zweite Haltelement 416 spielfrei aufgenommen ist. Insbesondere weißt das zweite Halteelement eine Außenkontur auf, die im Wesentlichen dem Innenprofil 418 entspricht. Des Weiteren ist vorgesehen, dass eine Tiefe T2 des zweiten Halteelementes im Wesentlichen einer Tiefe T1 des Innenprofils 418 entspricht.

Diese zweite Ausführungsform zeichnet sich dadurch aus, dass das erste Halteelement seitlich auf das zweite Halteelement aufgeschoben wird. Diese Ausführungsform ist insbesondere für leichte und flache Regalböden geeignet und zeichnet sich durch eine geringe Bauhöhe aus.

## Patentansprüche

1. Vorrichtung (10, 68, 84, 106, 276, 346, 412) zur Befestigung eines vorzugsweise flächigen Gegenstandes (12, 166, 198, 228, 244, 254, 260, 278) wie Regalboden oder Sitz an einem Bauwerk (14, 280) wie Wand oder Boden, umfassend ein erstes Halteelement (16, 108, 282 348, 414),sowie ein zweites Halteelement (20, 70, 86, 194, 22, 242, 252, 266, 284, 352, 416), wobei das zweite Halteelement (20, 70, 86, 194, 22, 242, 252, 266, 284, 352, 416) formschlüssig mit dem ersten Halteelement (16, 108) verbindbar ist, wobei das erste Halteelement (16, 108, 282 348, 414), welches mit dem Bauwerk (14, 280) oder dem Gegenstand (12, 166, 198, 228, 244, 254, 260, 278) verbindbar oder integraler Bestandteil des Bauwerks oder des Gegenstands ist, ein C- oder U-förmiges Innenprofil (24, 328, 418) aufweist, wobei das zweite Halteelement (20, 70, 86, 194, 22, 242, 252, 266, 284, 352, 416) welches mit dem Gegenstand (12, 166, 198, 228, 244, 254, 260, 278) oder dem Bauwerk verbindbar oder integraler Bestandteil des Gegenstandes oder des Bauwerks ist, ein C- oder U-förmiges Außenprofil (26, 287) aufweist und wobei das C- oder U-förmige Außenprofil (26, 287) formschlüssig in dem Innenprofil (24, 328, 418) aufnehmbar und mittels zumindest eines Spannelementes (28, 98, 100, 120, 122, 338) gegen das Innenprofil (24, 328, 418) verspannbar ist,
**dadurch gekennzeichnet,**
**dass** das erste Halteelement (16, 108, 282, 348) einen ersten Schenkel (30, 110, 308, 366) und einen zweiten Schenkel (32, 112, 310, 364) sowie einen die Schenkel (30, 32, 110, 112, 308, 310, 364, 366) verbindenden Steg (34, 114, 316, 368) umfasst, wobei der erste Schenkel (30, 110, 308, 366) rechtwinklig zu dem Steg (34, 114, 316, 368) verläuft und wobei der zweite Schenkel (32, 112) einen ersten Schenkelabschnitt (36, 110, 112) oder einen Flächenabschnitt (334) aufweist, der gerade und rechtwinklig zu dem Steg (34, 114, 316, 368) verläuft sowie einen daran anschließenden zweiten Schenkelabschnitt (38, 118, 116) oder schrägen Flächenabschnitt (332) aufweist, der in Richtung des ersten Schenkels (30, 110, 308, 366) gebogen oder geneigt ist und bezogen auf den geraden Schenkelabschnitt (36, 112, 110) oder den graden Flächenabschnitt (344) schräg verläuft,
**dass** das zweite Halteelement (20, 70, 86, 284, 352) einen ersten Schenkel (40, 74, 88, 290, 356) und einen zweiten Schenkel (42, 76, 90, 292, 358) sowie einen die Schenkel (40, 42; 74, 76; 88, 90, 290, 292, 356, 358) verbindenden Steg (44, 82, 92, 294, 360) umfasst, wobei der erste Schenkel (40, 74, 88, 290, 356) gerade und rechtwinklig zu dem Steg (44, 82, 92, 294, 360) verläuft, wobei der zweite Schenkel (42, 76, 90, 292, 358) einen ersten Schenkelabschnitt (46, 80, 94, 96) aufweist, der sich in einem stumpfen Winkel α schräg zu dem Steg (44, 82, 86) erstreckt, sowie einen zweiten Schenkelabschnitt, im Anschluss an den schrägen ersten Schenkelabschnitt (48, 78, 88, 90), der sich parallel zu dem ersten Schenkel erstreckt,
**dass** das zumindest eine Spannelement (28, 98, 100, 104, 120, 122, 338, 372) als eine Schraube ausgebildet ist, die in einem Gewinde des ersten oder zweiten Schenkels des ersten Halteelementes aufgenommen ist, wobei sich eine Mittelachse des Spannelementes parallel zu dem Steg erstreckt,
**dass** das zumindest eine Spannelement (98, 100, 104, 120, 122, 338, 372) in dem ersten Schenkel und/oder dem zweiten Schenkel in dem geraden Schenkelabschnitt und/oder dem schrägen Schenkelabschnitt angeordnet ist, und
**dass** das zumindest eine Spannelement (28, 98, 100, 104, 120, 122, 338, 372) gegen den ersten Schenkel (40, 74, 88, 290, 356) des zweiten Haltelementes (20, 70, 86, 284, 352) gerichtet ist.

2. Vorrichtung nach Anspruch 1,
**dadurch gekennzeichnet,**
**dass** das C- oder U-förmige Innenprofil (24, 328, 418) der ersten Halteelementes (16, 108, 282, 348) ein Innenprofil einer C- oder U-Schiene oder ein Innenprofil eines extrudierten Strangprofils wie Al-Strangprofil ist.

3. Vorrichtung nach Anspruch 1,
**dadurch gekennzeichnet,**
**dass** das C- oder U-förmige Außenprofil (26, 287) des zweiten Halteelementes (20, 70, 86, 194, 212, 242, 252, 266, 284, 352, 416) ein Außenprofil einer C- oder U-Schiene oder ein Außenprofil eines vorzugsweise extrudierten Strangprofils wie Al-Strangprofil ist.

4. Vorrichtung nach zumindest einem der vorgehenden Ansprüche,
**dadurch gekennzeichnet,**
**dass** der ersten Schenkel und/oder der zweite Schenkel des ersten Halteelementes jeweils den schrägen Schenkelabschnitt (116, 118) oder den schrägen Flächenabschnitt (332) aufweisen und dass der schräge Schenkelabschnitt (116, 118) oder schräge Flächenabschnitt (322) mit einem korrespondierenden schrägen Schenkelabschnitt (46, 80, 94, 96) oder schrägen Flächenabschnitt (292, 380) des zweiten Halteelements formschlüssig zusammenwirkt.

5. Vorrichtung nach zumindest einem der vorgehenden Ansprüche,
**dadurch gekennzeichnet,**
**dass** das zumindest eine Spannelement (28, 98, 100, 104, 120, 122, 338, 372) als eine Schraube wie Stiftschraube ausgebildet ist.

6. Vorrichtung nach zumindest einem der vorgehenden Ansprüche, **dadurch gekennzeichnet,**
**dass** die Öffnung des ersten Haltelements (16, 282, 348) eine lichte Weite (W) aufweist, die größer ist als Abstand (H) zwischen unterer und oberer Fläche (300, 304) des ersten und zweiten Schenkels (260, 292) des zweiten Halteelementes (20, 284, 352).

7. Vorrichtung nach zumindest einem der vorgehenden Ansprüche, **dadurch gekennzeichnet,**
**dass** das zweite Halteelement (20, 284, 352) frontseitig in das C- oder U-förmige Innenprofil des ersten Halteelementes (16, 282, 348) einsteckbar ist.

8. Vorrichtung nach Anspruch 1,
**dadurch gekennzeichnet,**
**dass** das erste Halteelement (16, 282, 348) eine Tiefe (T1) aufweist, die gleich oder größer ist als einer Tiefe (T2) des C- oder U-förmigen Außenprofils des zweiten Haltelements (20, 284, 352) mit.

9. Vorrichtung nach zumindest einem der vorgehenden Ansprüche,
**dadurch gekennzeichnet,**
**dass** das zweite Halteelement (70, 416) stirnseitig in das erste Halteelement (16, 414) entlang seiner Längsachse einschiebbar ist.

10. Vorrichtung nach zumindest einem der vorgehenden Ansprüche,
**dadurch gekennzeichnet,**
**dass** das zweite Halteelement (70, 284, 352, 416) in dem ersten Halteelement (16, 282, 348, 414) verrastbar angeordnet ist.

11. Vorrichtung nach zumindest einem der vorgehenden Ansprüche,
**dadurch gekennzeichnet,**
**dass** der gerade und/oder schräge Schenkelabschnitt (78, 80) oder Flächenabschnitt (292, 380) des zweiten Halteelementes (70, 284, 352) außenseitig in Längsrichtung eine Rastnase (138) oder Rille (142, 342, 396) aufweist, und dass eine Innenfläche (36, 38, 332, 388) des geraden oder schrägen Schenkelabschnitts des ersten Halteelementes (16, 282, 348) eine Rille (136, 346, 396) zur Aufnahme der Rastnase (138, 344, 398) oder eine Rastnase (140, 398) zum Einrasten in die Rille (396) aufweist.

12. Vorrichtung nach Anspruch 1,
**dadurch gekennzeichnet,**
**dass** das erste Halteelement (16, 108, 282, 348, 414) oder das zweite Halteelement (20, 70, 86, 194, 212, 242, 252, 266, 284, 352, 416) mit seinem Steg (34, 114, 316, 368; 44, 82, 92,294, 360) an einem Längsrand des flächigen Gegenstandes wie Regalbodens oder an der Wand befestigt ist, wobei insbesondere das erste Halteelement (16, 108, 282, 348, 414) oder das zweite Halteelement (20, 70, 194, 212, 242, 252, 266, 284, 352, 416)) verdeckt in einer Nut (50, 170, 286)oder in einem Hohlraum eines Längsrandes des flächigen Gegenstandes (12, 166, 198, 244, 278) angeordnet ist.

13. Vorrichtung nach zumindest einem der vorgehenden Ansprüche,
**dadurch gekennzeichnet,**
**dass** sich von dem Steg (82) des zweiten Halteelementes (194) eine Verstärkungslasche (196, 256) zur Verbindung mit dem flächigen Gegenstand (198) erstreckt, wobei die Verstärkungslasche (196) sich rechtwinklig zu dem Steg erstreckt und mit diesem eine L-Form oder T-Form bildet, wobei insbesondere sich von dem Steg (82) zwei Verstärkungslaschen (224, 226) erstrecken, die mit dem Steg eine U-Form bilden.

14. Vorrichtung nach Anspruch 1,
**dadurch gekennzeichnet,**
**dass** das erste oder zweite Halteelement (16) mit seinem Steg (34) auf der Wandfläche (14) oder einer Bodenfläche befestigbar ist und dass der flächige Gegenstand ein Regalboden, eine Fensterbank, ein Sitz, eine Handtuchhalterung oder eine Halterung wie Lampenhalterung ist.

15. Vorrichtung nach Anspruch 1,
**dadurch gekennzeichnet,**
das zwischen dem ersten und zweiten Schenkel (32, 34) der ersten Halteelements (16) frontseitig zumindest ein Verstärkungssteg (58) angeordnet ist.

## Claims

1. Device (10, 68, 84, 106, 276, 346, 412) for fastening a preferably planar object (12, 166, 198, 228, 244, 254, 260, 278) such as a shelf or seat to a construction (14, 280) such as a wall or floor, comprising a first holding element (16, 108, 282, 348, 414),and a second holding element (20, 70, 86, 194, 22, 242, 252, 266, 284, 352, 416), wherein the second holding element (20, 70, 86, 194, 22, 242, 252, 266, 284, 352, 416) can be connected in a form-locking manner to the first holding element (16, 108), wherein the first holding element (16, 108, 282 348, 414), which can be connected to the construction (14, 280) or the object (12, 166, 198, 228, 244, 254, 260, 278), or is integral with the construction or the object, has a C- or U-shaped inner profile (24, 328, 418), wherein the second holding element (20, 70, 86, 194, 22, 242, 252, 266, 284, 352, 416), which can be connected to the object (12, 166, 198, 228, 244, 254, 260, 278) or the construction, or is integral with the construction or object, has a C- or U-shaped outer profile (26, 287) and wherein the C- or U-shaped outer profile (26, 287) can be received in a form-locking manner in the inner profile (24, 328, 418) and can be tensioned against the inner profile (24, 328, 418) by means of at least one clamping element (28, 98, 100, 120, 122, 338), **characterized in,**
**that** the first holding element (16, 108,282, 348) comprises a first leg (30, 110, 308, 366) and a second leg (32, 112, 310, 364) as well as a web (34, 114, 316, 368) connecting the legs (30, 32, 110, 112, 308, 310, 364, 366), 114, 316, 368), wherein the first leg (30, 110, 308, 366) extends at right angles to the web (34, 114, 316, 368) and wherein the second leg (32, 112) comprises a first leg portion (36, 110, 112) or a surface portion (334) which extends straight and at right angles to the web (34, 114, 316, 368) and has an adjoining second leg portion (38, 118, 116) or oblique surface portion (332) which is curved or inclined in the direction of the first leg (30, 110, 308,366) and extends obliquely with respect to the straight leg portion (36, 112, 110) or the straight surface portion (344),
**that** the second holding element (20, 70, 86, 284, 352) comprises a first leg (40, 74, 88, 290, 356) and a second leg (42, 76, 90, 292, 358) as well as a web (44, 82, 92, 294, 360) connecting the legs (40, 42; 74, 76; 88, 90, 290, 292, 356, 358), said first leg (40, 74, 88, 290, 356) being straight and perpendicular to said web (44, 82, 92, 294, 360), said second leg (42, 76, 90, 292, 358) having a first leg portion (46, 80, 94, 96) extending at an obtuse angle α oblique to the web (44, 82, 86) and a second leg portion, adjacent the oblique first leg portion (48, 78, 88, 90), extending parallel to the first leg,
**that** the at least one clamping element (28, 98, 100, 104,120, 122, 338, 372) is formed as a screw received in a thread of the first or second leg of the first holding element, wherein a center axis of the clamping element extends parallel to the web, that the at least one clamping element (98, 100, 104, 120, 122, 338, 372) is arranged in the first leg and/or the second leg in the straight leg section and/or the oblique leg section, and
**that** the at least one clamping element (28, 98, 100, 104, 120, 122, 338, 372) is directed against the first leg (40, 74, 88, 290, 356) of the second holding element (20, 70, 86, 284, 352).

2. Device according to claim 1,
**characterized in,**
**that** the C- or U-shaped inner profile (24, 328, 418) of the first holding element (16, 108, 282, 348) is an inner profile of a C- or U-shaped rail or an inner profile of an extruded profile such as extruded Al profile.

3. Device according to claim 1,
**characterized in,**
**that** the C- or U-shaped outer profile (26, 287) of the second holding element (20, 70, 86, 194, 212, 242, 252, 266, 284, 352, 416) is an outer profile of a C- or U-shaped rail or an outer profile of a preferably extruded profile such as extruded Al profile.

4. Device according to at least one of the preceding claims,
**characterized in,**
**that** the first leg and/or the second leg of the first holding element each have the oblique leg section (116, 118) or the oblique surface section (332), and that the oblique leg section (116, 118) or oblique surface section (322) interacts in a form-locking manner with a corresponding oblique leg section (46, 80, 94, 96) or oblique surface section (292, 380) of the second holding element.

5. Device according to at least one of the preceding claims,
**characterized in,**
**that** the at least one clamping element (28, 98, 100, 104, 120, 122, 338, 372) is formed as a screw such as a stud bolt.

6. Device according to at least one of the preceding claims,
**characterized in,**
**that** the opening of the first holding element (16, 282, 348) has a clear width (W) which is greater than the distance (H) between the lower and upper surfaces (300, 304) of the first and second legs (260, 292) of the second holding element (20, 284, 352).

7. Device according to at least one of the preceding claims,
**characterized in,**
**that** the second holding element (20, 284, 352) can be inserted into the C-shaped or U-shaped inner profile of the first holding element (16, 282, 348) at the front.

8. Device according to claim 1,
**characterized in,**
**that** the first holding element (16, 282, 348) has a depth (T1) which is equal to or greater than a depth (T2) of the C- or U-shaped outer profile of the second holding element (20, 284, 352).

9. Device according to at least one of the preceding claims,
**characterized in,**
**that** the second holding element (70, 416) can be pushed into the first holding element (16, 414) along its longitudinal axis at the end face.

10. Device according to at least one of the preceding claims,
**characterized in,**
**that** the second holding element (70, 284, 352, 416) is arranged in the first holding element (16, 282, 348, 414) in a latchable manner.

11. Device according to at least one of the preceding claims,
**characterized in,**
**that** the straight and/or oblique leg section (78, 80) or surface section (292, 380) of the second holding element (70, 284, 352) has a latching lug (138) or slot (142, 342, 396) on the outside in the longitudinal direction, and that an inner surface (36, 38, 332, 388) of the straight or oblique leg section of the first holding element (16, 282, 348) has a solot (136, 346, 396) for receiving the latching lug (138, 344, 398) or a latching lug (140, 398) for latching into the groove (396).

12. Device according to claim 1,
**characterized in,**
**that** the first holding element (16, 108, 282, 348, 414) or the second holding element (20, 70, 86, 194, 212, 242, 252, 266, 284, 352, 416) with its web (34, 114, 316, 368; 44, 82, 92, 294, 360) is fastened to a longitudinal edge of the planar object such as shelf or to the wall, wherein in particular the first holding element (16, 108, 282, 348, 414) or the second holding element (20, 70, 194, 212, 242, 252, 266, 284, 352, 416)) is concealed in a groove (50, 170, 286) or in a cavity of a longitudinal edge of the planar object (12, 166, 198, 244, 278).

13. Device according to at least one of the preceding claims,
**characterized in,**
**that** a reinforcing tab (196, 256) extends from the web (82) of the second holding element (194) for connection to the planar object (198), the reinforcing tab (196) extending at right angles to the web and forming an L-shape or T-shape therewith, wherein in particular two reinforcing tabs (224, 226) extend from the web (82) and form a U-shape with the web.

14. Device according to claim 1,
**characterized in,**
**that** the first or second holding element (16) can be fastened by its web (34) to the wall surface (14) or to a floor surface, and that the planar object is a shelf, a window sill, a seat, a towel holder or a holder such as a lamp holder.

15. Device according to claim 1,
**characterized in,**
**that** at least one reinforcing web (58) is arranged between the first and second legs (32, 34) of the first holding element (16) on the front side.

## Revendications

1. Dispositif (10, 68, 84, 106, 276, 346, 412) de fixation d'un objet de préférence plat (12, 166, 198, 228, 244, 254, 260, 278) tel qu'une étagère ou un siège sur une construction (14, 280) telle qu'un mur ou un sol, comprenant un premier élément de fixation (16, 108, 282 348, 414) ainsi qu'un second élément de fixation (20, 70, 86, 194, 22, 242, 252, 266, 284, 352, 416), sachant que le second élément de fixation (20, 70, 86, 194, 22, 242, 252, 266, 284, 352, 416) est reliable par complémentarité de forme au premier élément de fixation (16, 108), sachant que le premier élément de fixation (16, 108, 282 348, 414), qui est reliable à la construction (14, 280) ou à l'objet (12, 166, 198, 228, 244, 254, 260, 278) ou est une partie intégrante de la construction ou de l'objet, présente un profilé intérieur en forme de C ou de U (24, 328, 418), sachant que le second élément de fixation (20, 70, 86, 194, 22, 242, 252, 266, 284, 352, 416), qui est reliable à l'objet (12, 166, 198, 228, 244, 254, 260, 278) ou à la construction ou est une partie intégrante de l'objet ou de la construction, présente un profilé extérieur en forme de C ou de U (26, 287) et sachant que le profilé extérieur en forme de C ou de U (26, 287) peut être logé par complémentarité de forme dans le profilé intérieur (24, 328, 418) et peut être serré au moyen d'au moins un élément de serrage (28, 98, 100, 120, 122, 338) contre le profilé intérieur (24, 328, 418),
**caractérisé en ce**
**que** le premier élément de fixation (16, 108, 282, 348) comprend une première branche (30, 110, 308, 366) et une seconde branche (32, 112, 310, 364) ainsi qu'une traverse (34, 114, 316, 368) reliant les branches (30, 32, 110, 112, 308, 310, 364, 366), sachant que la première branche (30, 110, 308, 366) s'étend perpendiculairement à la traverse (34, 114, 316, 368) et sachant que la seconde branche (32, 112) comprend une première section de branche (36, 110, 112) ou une section de surface (334) qui s'étend rectilignement et perpendiculairement à la traverse (34, 114, 316, 368) ainsi qu'une seconde section de branche s'y raccordant (38, 118, 116) ou une section de surface inclinée (332) qui est courbée ou inclinée en direction de la première branche (30, 110, 308, 366) et s'étend en biais par rapport à la section de branche droite (36, 112, 110) ou à la section de surface droite (344),
**que** le second élément de fixation (20, 70, 86,284, 352) comprend une première branche (40, 74, 88,290, 356) et une seconde branche (42, 76, 90,292,358) ainsi qu'une traverse (44, 82, 92, 294, 360) reliant les branches (40, 42; 74, 76; 88, 90, 290, 292, 356, 358), sachant que la première branche (40, 74, 88, 290, 356) s'étend rectilignement et perpendiculairement à la traverse (44, 82, 92, 294, 360), sachant que la seconde branche (42, 76, 90, 292, 358) comprend une première section de branche (46, 80, 94, 96) qui s'étend en biais par rapport à la traverse (44, 82, 86) selon un angle obtus α ainsi qu'une seconde section de branche, dans le prolongement de la première section de branche inclinée (48, 78, 88, 90), qui s'étend parallèlement à la première branche, qu'au moins un élément de serrage (28, 98, 100, 104, 120, 122, 338, 372) est conçu sous la forme d'une vis qui est logée dans le filetage de la première ou seconde branche du premier élément de fixation, sachant qu'un axe médian de l'élément de serrage s'étend parallèlement à la traverse,
**qu'**au moins un élément de serrage (98, 100, 104, 120, 122, 338, 372) est disposé dans la section de branche rectiligne et/ou la section de branche inclinée de la première branche et/ou la seconde branche, et
**qu'**au moins un élément de serrage (28, 98, 100, 104, 120, 122, 338, 372) est orienté contre la première branche (40, 74, 88, 290, 356) du second élément de fixation (20, 70, 86, 284, 352).

2. Dispositif selon la revendication 1,
**caractérisé en ce**
**que** le profilé intérieur en forme de C ou de U (24, 328, 418) du premier élément de fixation (16, 108, 282, 348) est un profilé intérieur d'un rail en C ou en U ou un profilé intérieur d'un profilé extrudé, par exemple un profilé extrudé en aluminium.

3. Dispositif selon la revendication 1,
**caractérisé en ce**
**que** le profilé extérieur en forme de C ou de U (26, 287) du second élément de fixation (20, 70, 86, 194, 212, 242, 252, 266, 284, 352, 416) est un profilé extérieur d'un rail en C ou en U ou un profilé extérieur d'un profilé de préférence extrudé, par exemple un profilé extrudé en aluminium.

4. Dispositif selon au moins l'une des précédentes revendications,
**caractérisé en ce**
**que** la première branche et/ou la seconde branche du premier élément de fixation comprennent respectivement la section de branche inclinée (116, 118) ou la section de surface inclinée (332) et que la section de branche inclinée (116, 118) ou la section de surface inclinée (322) interagit par complémentarité de forme avec une section de branche inclinée (46, 80, 94, 96) correspondante ou une section de surface inclinée (292, 380) correspondante du second élément de fixation.

5. Dispositif selon au moins l'une des précédentes revendications,
**caractérisé en ce**
**qu'**au moins un élément de serrage (28, 98, 100, 104, 120, 122, 338, 372) est conçu sous la forme d'une vis, par exemple un goujon fileté.

6. Dispositif selon au moins l'une des précédentes revendications,
**caractérisé en ce**
**que** l'ouverture du premier élément de fixation (16, 282, 348) présente un diamètre intérieur (W) supérieur à la distance (H) entre la surface inférieure et la surface supérieure (300, 304) de la première et de la seconde branches (260, 292) du second élément de fixation (20, 284, 352).

7. Dispositif selon au moins l'une des précédentes revendications,
**caractérisé en ce**
**que** le second élément de fixation (20, 284, 352) est insérable frontalement dans le profilé intérieur en forme de C ou de U du premier élément de fixation (16, 282, 348).

8. Dispositif selon la revendication 1,
**caractérisé en ce**
**que** le premier élément de fixation (16, 282, 348) présente une profondeur (T1) qui est égale ou supérieure à une profondeur (T2) du profilé extérieur en forme de C ou de U du second élément de fixation (20, 284, 352).

9. Dispositif selon au moins l'une des précédentes revendications,
**caractérisé en ce**
**que** le second élément de fixation (70, 416) est insérable frontalement dans le premier élément de fixation (16, 414) le long de son axe longitudinal.

10. Dispositif selon au moins l'une des précédentes revendications,
**caractérisé en ce**
**que** le second élément de fixation (70, 284, 352, 416) est disposé de sorte à être enclenché dans le premier élément de fixation (16, 282, 348, 414).

11. Dispositif selon au moins l'une des précédentes revendications,
**caractérisé en ce**
**que** la section de branche droite et/ou inclinée (78, 80) ou la section de surface (292, 380) du second élément de fixation (70, 284, 352) présente à l'extérieur un ergot d'enclenchement (138) ou une rainure (142, 342, 396) dans la direction longitudinale, et qu'une surface intérieure (36, 38, 332, 388) de la section de branche droite ou inclinée du premier élément de fixation (16, 282, 348) comprend une rainure (136, 346, 396) destinée à réceptionner l'ergot d'enclenchement (138, 344, 398) ou un ergot d'enclenchement (140, 398) destiné à s'enclencher dans la rainure (396).

12. Dispositif selon la revendication 1,
**caractérisé en ce**
**que** le premier élément de fixation (16, 108, 282, 348, 414) ou le second élément de fixation (20, 70, 86, 194, 212, 242, 252, 266, 284, 352, 416) est fixé par sa traverse (34, 114, 316, 368; 44, 82, 92, 294, 360) sur un bord longitudinal de l'objet plat tel qu'une étagère ou sur un mur, sachant que le premier élément de fixation (16, 108, 282, 348, 414) ou le second élément de fixation (20, 70, 194, 212, 242, 252, 266, 284, 352, 416) est en particulier disposé de manière invisible dans une rainure (50, 170, 286) ou dans un espace creux d'un bord longitudinal de l'objet plat (12, 166, 198, 244, 278).

13. Dispositif selon au moins l'une des précédentes revendications,
**caractérisé en ce**
**qu'**une patte de renfort (196, 256) s'étend depuis la traverse (82) du second élément de fixation (194) pour être reliée à l'objet plat (198), sachant que la patte de renfort (196) s'étend perpendiculairement à la traverse et forme avec cette dernière un L ou un T, sachant que deux pattes de renfort (224, 226) s'étendent en particulier depuis la traverse (82) et forment un U avec ladite traverse.

14. Dispositif selon la revendication 1,
**caractérisé en ce**
**que** le premier ou le second élément de fixation (16) est fixable par sa traverse (34) sur la surface murale (14) ou une surface au sol et que l'objet plat est une étagère, un rebord de fenêtre, un siège, un porte-serviettes ou un support tel qu'un support de lampe.

15. Dispositif selon la revendication 1,
**caractérisé en ce**
**qu'**au moins une traverse de renforcement (58) est disposée frontalement entre la première et la seconde branches (32, 34) du premier élément de fixation (16).
